# EUROPÄISCHE PATENTSCHRIFT

(11) **EP 4 499 425 B1**
(45) Veröffentlichungstag und Bekanntmachung des Hinweises auf die Patenterteilung: **14.10.2026**
(21) Anmeldenummer: 23810039.0
(22) Anmeldetag: 21.11.2023
(51) Int. Cl.: B60H 1/00, B62D 25/04, B60H 1/22

(54) **KRAFTWAGEN AUFWEISEND EINE KLIMATISIERUNGSEINRICHTUNG FÜR EINEN INNENRAUM DES KRAFTWAGEN**
MOTOR VEHICLE WITH AN AIR-CONDITIONING DEVICE FOR AN INTERIOR OF THE MOTOR VEHICLE
VÉHICULE AUTOMOBILE COMPORTANT UN DISPOSITIF DE CLIMATISATION POUR UN ESPACE INTÉRIEUR DUDIT VÉHICULE AUTOMOBILE

(30) Priorität: 12.01.2023 DE 102023000063
(43) Veröffentlichungstag der Anmeldung: 05.02.2025
(73) Patentinhaber: Mercedes-Benz Group AG, 70372 Stuttgart (DE)
(72) Erfinder: CURRLE, Joachim, 70327 Stuttgart (DE)
(74) Vertreter: Novagraaf Group
(86) Internationale Anmeldenummer: PCT/EP2023/082531
(87) Internationale Veröffentlichungsnummer: WO 2024/149500

(56) Entgegenhaltungen:
- EP-A2- 1 314 592
- KR-A- 20210 027 757
- US-A1- 2011 074 184

## Beschreibung

Die Erfindung betrifft einen Kraftwagen mit einer Klimatisierungseinrichtung für einen Innenraum des Kraftwagens gemäß dem Oberbegriff des unabhängigen Patentanspruchs 1.

Im Allgemeinen herrschen in einem Innenraum eines Kraftwagens unterschiedliche Temperaturen. Diese Temperaturunterschiede können, gerade wenn die Luftströme im Inneren des Kraftwagens verschiedene Strömungsrichtungen aufweisen, zu einer Verminderung des Komforts für einen Insassen des Kraftwagens führen.

Aus der EP 1741581 B1 ist beispielsweise eine Fondbelüftungs-Heizungs- oder - Klimaanlage für ein Fahrzeug offenbart mit einem in einem Gehäuse angeordneten Gebläse und mit einem Luftkanalsystem mit zumindest einer ersten und einer zweiten Düse, wobei über das Luftkanalsystem Luft den Düsen zuführbar ist. Im Gehäuse ist mindestens eine Trennwand für die Luftverteilung auf die erste und zweite Düse vorgesehen und die Luftverteilung ist durch die Anordnung der Trennwand oder der Trennwände festgelegt.

Die DE 10 2016 006 489 A1 offenbart eine Klimatisierungseinrichtung für einen Innenraum eines Kraftwagens zur Bereitstellung einer klimatisierten Luftmenge innerhalb des Innenraums, mit wenigstens einer B-Säulendüse innerhalb einer B-Säule des Kraftwagens zur Ausströmung eines Luftstroms in einen Fondbereich des Innenraums, wobei hinter einer B-Säulenverkleidung der B-Säule wenigstens ein Gebläse angeordnet ist, durch welches die Luftmenge aus dem Innenraum über eine mit dem Gebläse verbundene Lufteintrittsöffnung der B-Säulenverkleidung ansaugbar ist.

Die EP 1 314 592 A2 betrifft eine Heiz- oder Klimaanlage für einen Innenraum eines Fahrzeugs mit einer zentralen Heiz- oder Kühlvorrichtung und einer dezentralen

Luftfördervorrichtung, die mehrere lokal im Fahrzeuginnenraum angeordnete Luftförderaggregate umfasst. In mehreren Teilräumen des Fahrzeuginnenraumes ist jeweils ein Luftförderaggregat der dezentralen Luftfördervorrichtung zum Umwälzen von Umluft in dem jeweiligen Teilraum angeordnet.

Die US 2011 074 184 A1 betrifft eine Innenverkleidung mit integriertem HVAC-Kanal. Die Innenverkleidung weist eine nach innen gerichtete Oberfläche und gegenüberliegende nach außen gerichtete Oberfläche auf. Das hintere Verschlusselement ist an der nach außen gerichteten Oberfläche der Innenverkleidung befestigt. Die nach innen gerichtete Oberfläche des hinteren Verschlusselements und die nach außen gerichtete Oberfläche der Innenverkleidung definieren einen integrierten HVAC-Kanal mit einem ersten offenen Ende und einem zweiten offenen Ende.

Die gattungsgemäße KR 2021 0027 757 A betrifft eine Rücksitzklimaanlage für ein Fahrzeug. Die Rücksitzklimaanlage umfasst: eine Rücksitzklimaanlage, die in der Mitte einer B-Säule installiert ist; ein Luftgebläse, das an der B-Säule installiert ist, um Innenluft zu blasen; und ein Kühlmittelrohr, das mit einem Wärmetauscher verbunden ist, der in der Rücksitzklimaanlage durch das untere Ende eines Vordersitztüröffnungsteils installiert ist. Insbesondere ist der Wärmetauscher an der untersten Seite der Rücksitzklimaanlage installiert, um leicht mit dem Kühlmittelrohr verbunden zu werden, um effizient Wärme mit Luft auszutauschen, die vom Luftgebläse und dem Kühlmittelrohr einströmt.

Aufgabe der vorliegenden Erfindung ist es, einen Kraftwagen aufweisend eine Klimatisierungseinrichtung für einen Innenraum des Kraftwagens derart weiterzuentwickeln, dass der Komfort eines Insassen innerhalb des Innenraums verbessert wird.

Diese Aufgabe wird erfindungsgemäß durch einen Kraftwagen mit einer Klimatisierungseinrichtung mit den Merkmalen des unabhängigen Patentanspruchs 1. Vorteilhafte Ausgestaltungen mit günstigen Weiterbildungen der Erfindung sind Gegenstand der jeweiligen abhängigen Ansprüche.

Ein erster Aspekt der Erfindung betrifft einen Kraftwagen mit einer Klimatisierungseinrichtung in einem Innenraum des Kraftwagens, insbesondere eines Personenkraftwagens zur Bereitstellung einer klimatisierten Luftmenge und somit zur Anpassung einer Temperatur innerhalb des Innenraums, um den Komfort eines Insassen wenigstens teilweise zu steigern. Die Klimatisierungseinrichtung weist hierbei wenigstens eine B-Säulendüse innerhalb einer B-Säule des Kraftwagens auf, insbesondere weist die Klimatisierungseinrichtung an jeder B-Säule zwei zueinander korrespondierende B-Säulendüsen auf. Die wenigstens eine B-Säulendüse ist zur Ausströmung eines Luftstroms zur Verbesserung des Komforts in einem Fondbereich des Innenraums des Kraftwagens anwendbar, bei einer Anordnung jeweiliger B-Säulendüsen an den jeweiligen B-Säulen ist es dementsprechend vorgesehen, dass die jeweiligen B-Säulendüsen jeweilige Luftströme korrespondierend zu deren Einstellung beidseitig in jeweilige Fondbereiche des Innenraums ausströmen. Die somit ausströmenden beziehungsweise austretenden Luftströme werden somit erfindungsgemäß in den Fondbereich des Innenraums ausgeströmt und stellen somit eine wenigstens teilweise durch die Klimatisierungseinrichtung klimatisierte Luftmenge innerhalb des gesamten Innenraums, jedoch insbesondere im Fondbereich bereit.

Um die Aufgabe der Erfindung zu lösen und somit einen Komfort eines Insassen innerhalb des Innenraums wenigstens teilweise zu verbessern ist es erfindungsgemäß vorgesehen, dass hinter einer B-Säulenverkleidung der B-Säule wenigstens ein Gebläse angeordnet ist, durch welches die Luftmenge aus dem Innenraum über eine mit dem Gebläse verbundene Lufteintrittsöffnung ansaugbar und über die B-Säulendüse direkt in den Fondbereich ausströmbar ist. Das bedeutet, dass zur Bewahrung einer einheitlichen Ausgestaltung des Innenraums beziehungweise des Interieurs, die B-Säulendüse hinter der B-Säulenverkleidung angeordnet und somit versteckt ist, insbesondere so, dass die B-Säulendüse für den Insassen im Wesentlichen unsichtbar ist. Die B-Säule weist hierfür einen vorgegebenen Raum auf, in welchem das Gebläse und die B-Säulendüse aufgenommen sind sowie jeweilige Anschlüsse für eine elektrische/elektronische Kopplung des Gebläses an wenigstens eine Stromquelle und/oder an einer mit dem Kraftwagen gekoppelten Steuereinrichtung oder einer dem Kraftwagen bereits angeordneten Steuereinrichtung zum Steuern der Klimatisierungseinrichtung, je nach Ausgestaltung.

Damit nun den die Luftmenge, insbesondere eine beispielsweise durch eine Klimaanlage des Kraftwagens bereits temperierte Luftmenge aus dem Innenraum angesaugt wird, weist das Gebläse wenigstens eine Lufteintrittsöffnung auf, welche an der B-Säulenverkleidung angeordnet ist. Eine solche Lufteintrittsöffnung kann beispielsweise auch als eine mit einem Gitter versehene Lufteintrittsöffnung ausgebildet sein. Alternativ können auch eine Vielzahl von Lufteintrittsöffnungen, insbesondere mit einem geringen Durchmesser an der B-Säulenverkleidung angeordnet sein, um vom menschlichen Auge möglich ungesehen zu bleiben und um mit einem Interieur des Innenraums angepasst ausgestaltet zu sein. Diese Lufteintrittsöffnungen der B-Säulenverkleidung sind mit einer weiteren zweiten Lufteintrittsöffnung des Gebläses derart miteinander verbunden, dass die Luftmenge als wenigstens ein Luftstrom aus dem Innenraum durch die jeweilige Lufteintrittsöffnung an der B-Säulenverkleidung und stromabwärts durch die zweite Lufteintrittsöffnung des Gebläses in das Gebläse ansaugbar ist. Der durch das Gebläse angesaugte, insbesondere klimatisierte Luftstrom, das heißt insbesondere die durch das Gebläse angesaugte, insbesondere temperierte Luft wird nun über die dem Gebläse angeordnete B-Säulendüse in den Fondbereich des Innenraums wieder ausgeströmt, das heißt wieder aus dem Gebläse in den Innenraum befördert. Hierbei wird insbesondere mittels der Klimatisierungseinrichtung ein Richtungswechsel des angesaugten Luftstroms gegenüber dem ausgeströmten Luftstrom durchgeführt, wobei mittels des Gebläses und mittels der B-Säulendüse auch eine Temperierung als auch eine Stärke und Intensität des ausströmenden Luftstroms wenigstens teilweise einstellbar ist.

In anderen Worten wird ein bereits vorhandener Luftstrom aus dem Innenraum mittels des Gebläses angesaugt und über die B-Säulendüse in den Fonbereich des Innenraums ausgeströmt, wodurch beispielweise ein Richtungswechsel, eine Änderung der Intensität und eine Temperaturveränderung des angesaugten Stroms wenigstens teilweise einstellbar ist. Durch beispielweise einer angeordneten Steuereinrichtung können sämtliche Funktionen und Einstellungen der Klimatisierungseinrichtung derart miteinander konfiguriert und eingestellt werden, dass der Insasse, insbesondere im Fondbereich des Innenraums einen wenigstens teilweise gesteigerten Komfort hinsichtlich der ausströmenden Luft und ihrer Temperatur erfährt. Dementsprechend können somit zur Komfortsteigerung für die Fondsitzreihe insbesondere im hochpreisigen Fahrzeugsegment an den B-Säulen Luftdüsen beziehungsweise B-Säulendüsen angebracht werden.

Erfindungsgemäß ist vorgesehen, dass in der B-Säulendüse zur elektrischen Kühlung des ausströmenden Luftstroms ein Peltierelement angeordnet ist. Auch weitere Kühlungsmittel und/oder Kühlungselemente sind anwendbar, wobei die Kühlung des Luftstroms zur Komfortsteigerung vorgesehen ist. Durch einen elektrischen Anschluss sind das Peltierelement und/oder weitere Kühlungselemente insbesondere elektrisch steuerbar und regelbar.

Erfindungsgemäß ist vorgesehen, dass in einer Luftaustrittsrichtung des Luftstroms aus der B-Säulendüse das Peltierelement vor einem PTC-Element angeordnet ist. Zudem ist insbesondere vorgesehen, dass das Peltierelement als auch das PTC-Element in einem Bereich der B-Säulendüse, insbesondere in einem Bereich zwischen B-Säulendüse und Gebläse, insbesondere an einem Ausströmkanal aus dem Gebläse durch die B-Säulendüse angeordnet sind. Hierbei können sich das Peltierelement als auch das PTC-Element entlang eines Querschnitts des Ausströmkanals ausstrecken.

Erfindungsgemäß ist vorgesehen, dass die Lufteintrittsöffnung in Fahrzeughochrichtung im Wesentlichen oberhalb des Gebläses angeordnet ist. Die B-Säule als die Verbindung zwischen Fahrzeugboden und Fahrzeugdach und mit ihrer Anordnung in der Mitte der Fahrgastzelle weist in insbesondere in einem in Fahrzeughochrichtung unteren Bereich einen größeren Raum zur Aufnahme des Gebläses auf. Dadurch ist es vorteilhaft diesen Raum zu Nutzen und die Luftmasse aus dem Innenraum an das Gebläse hinzuführen. Zusätzlich ist die Luftmenge im oberen Bereich des Innenraums aufgrund von Thermodynamik wärmer, wodurch eine wenigstens teilweise temperierte Luftmasse ansaugbar ist, wodurch ein Heizen mittels der Klimatisierungseinrichtung wenigstens teilweise unterstützt wird.

In einer vorteilhaften Ausgestaltung der vorliegenden Erfindung ist es vorgesehen dass ein Luftkanal zwischen der Lufteintrittsöffnung und dem Gebläse angeordnet ist. Der durch die Eintrittsöffnung angesaugte Luftstrom wird hierbei über den Luftkanal in das Gebläse befördert, wobei der Luftkanal insbesondere zum Höhenausgleich der Lufteintrittsöffnung gegenüber dem Gebläse angewendet wird. Um einen Temperaturverlust zu vermieden kann ein solcher Luftkanal möglichst linear gebildet sein, wodurch der geringste Weg zum Gebläse hin genutzt wird. Zusätzlich kann der Luftkanal mit einem Dämmmaterial beispielwiese aus einem Kunststoff ummantelt sein, um einen Temperaturverlust entlang des Kanals wenigstens teilweise zu vermeiden. Durch die Ausgestaltung des Luftkanals, insbesondere hinsichtlich Querschnitt und Länge kann eine gewünschte Voreinstellung zum Ansaugen des Luftstroms beziehungsweise zum Ansaugen einer vorgegebenen Luftmenge unter Ausbildung des Luftstroms vorgegeben werden. Zudem ist es vorgesehen, dass ein aus wenigstens einer vorderen Seitendüse der Klimaanlage ausströmende Luftstrom von der Lufteintrittsöffnung an der B-Säule angesaugt wird, wodurch auch ein in der korrespondierenden Höhe der Lufteintrittsöffnung gegenüber der Seitendüse benötigt wird. Zum Erreichen der vorgegebenen Höhe der Seitendüse, ohne das Gebläse an eine weitere Stelle der B-Säule anordnen zu müssen, beziehungsweise ohne das Gebläse höher anbauen zu müssen, ist es vorgesehen, dass zwischen dem Gebläse und der Eintrittsöffnung der länglich ausgebildete Luftkanal angeordnet ist. Der aus der Seitendüse austretende Luftstrom wird somit durch die Eintrittsöffnungen angesaugt, welcher stromabwärts entlang des Luftkanals in Richtung des Gebläses vom Gebläse angesaugt und somit befördert wird, um anschließend durch die B-Säulenluftdüse in den Fondbereich wieder ausgeströmt zu werden. Insbesondere ist es vorgesehen, dass das Gebläse und die B-Säulendüse im Wesentlichen auf einer gleichen Fahrzeughöhe angeordnet sind, wodurch der Luftkanal den Höhenausgleich Höhe des anzusaugenden Luftstroms auf Höhe der Seitendüse ermöglicht. Mit dem Höhenausgleich kann insbesondere auf einfacher Art und Weise der Luftstrom besser angesaugt werden, da diese in der gewünschten Höhe eine höhere Intensität aufweist, als in einer unterschiedlichen Höhe, in welcher der Luftstrom wenigstens teilweise diffus an die Eintrittsöffnungen ankommen würde. Zudem ist der sich dadurch ergebene kürzere Weg zu der Eintrittsöffnung darin vorteilhaft, dass ein wegbedingter Temperaturverlust des angesaugten Luftstroms möglich geringgehalten wird. Mit der sich dadurch ergebenden Temperatur des angesaugten Luftstroms muss die Klimatisierungseinrichtung einen niedrigeren Temperaturunterschied zwischen der Temperatur des angesaugten Luftstroms und der vorgegebenen Temperatur des ausströmenden Luftstroms ausgleichen.

In noch einer vorteilhaften Ausgestaltung der vorliegenden Erfindung ist vorgesehen, dass an der B-Säulendüse wenigstens ein Verstellelement angeordnet ist, mittels welchem die ausströmende Luftmenge als der Luftstrom in Luftaustrittsrichtung wenigstens teilweise verstellbar ist. Insbesondere können hierbei sämtliche Ausgestaltungen von Verstellelemente angeordnet werden, insbesondere Lamellen, Gitterelemente und/oder weitere Elemente, welche vordergründig einen Richtungswechsel des Luftstroms bewirken. Diese Verstellelemente sind mittels der Steuereinrichtung und oder mittels einer Mechanik verstellbar, insbesondere wenigstens teilweise automatisch, wodurch der aus den Seitendüsen austretende Luftstrom im Wesentlich in Richtung der Eintrittsöffnungen richtbar ist beziehungsweise gerichtet werden kann. Dadurch wird der ausströmende Luftstrom besonders vorteilhaft durch die Eintrittsöffnung in das Gebläse hinein angesaugt. Es entsteht bei dem kürzeren Weg, wie zuvor schon erläutert, ein geringerer Temperaturverlust statt.

Erfindungsgemäß ist vorgesehen, dass in der B-Säulendüse zur elektrischen Heizung ein PTC-Element angeordnet ist. Auch weitere Heizmittel und/oder Heizelemente sind anwendbar, wobei das Heizen des Luftstroms zur Komfortsteigerung vorgesehen ist. Durch einen elektrischen Anschluss sind das PTC-Element und/oder weitere Heizelemente insbesondere elektrisch steuerbar und regelbar.

Weiterhin ist in einer vorteilhaften Ausgestaltung der vorliegenden Erfindung vorgesehen, dass das Gebläse als ein Radialgebläse ausgebildet ist, mittels welchem der Luftstrom im Wesentlichen axial zu einer Fahrzeugquerrichtung ansaugbar und radial zu der Fahrzeugquerrichtung ausströmbar ist. Hierfür ist die Lufteintrittsöffnung insbesondere an einer zum Innenraum zeigenden Verkleidung der B-Säule angeordnet, wobei die B-Säulendüse an einem Seitlichen Bereich der B-Säulenverkleidung angeordnet ist, insbesondere an der in Fahrzeuglängsrichtung nach hinten zeigenden Seite, wodurch der Fondbereich des Kraftwagens mit dem Luftstrom wenigstens teilweise klimatisiert wird, wodurch der Komfort für den Insassen insbesondere im Fondbereich gesteigert wird. Besonders vorteilhaft an der vorliegenden Erfindung ist, dass hohe Wärmeverluste in den Zufuhrkanälen zu den B-Säulendüsen, hohe Druckverluste und hoher Bauraumbedarf entfallen. Zudem kann eine Schließklappe an der B-Säulendüse entfallen, da eine Funktion einer solchen Schließklappe bei Abschaltung des Gebläses erfüllt ist.

In noch einer weiteren vorteilhaften Ausgestaltung der vorliegenden Erfindung ist er vorgesehen, dass eine Regelungseinrichtung angeordnet ist, mittel welcher das Gebläse und/oder das Verstellelement und/oder das Peltierelement und/oder das PTC-Element teilweise regelbar sind. Mit der Regelungseinrichtung wird insbesondere das Verstellen der B-Säulendüsen, derart geregelt, dass nicht nur der Komfort des Insassen gesteigert wird, sondern dass auch der Luftstrom in einer besonders vorteilhaften Ausrichtung ausgeströmt wird, insbesondere auch in Abhängigkeit von einer Voreinstellung einer gewünschten Temperatur des Innenraums, wobei ein Temperaturverlust der durch die Klimaanlage bereitgestellte Luftmenge ausgeglichen wird. Zusätzlich zur Richtungsänderung ist beispielsweise auch eine Querschnittsfläche der B-Säulendüse und somit eine Querschnittsfläche des ausströmenden Luftstroms einstellbar und entsprechend regelbar, wodurch insbesondere eine Intensität der Ausströmung geregelt wird, wodurch auch eine genauere Ausrichtung des Luftstroms möglich ist. Insbesondere sind die Regelungseinrichtung und die Steuereinrichtung miteinander gekoppelt. Insbesondere sind die Steuerungseinrichtung und/oder die Regelungseinrichtung dazu ausgebildet mit der Klimaanlage gekoppelt zu werden, um die Seitendüsen derart zu verstellen, dass der daraus ausströmende Luftstrom wenigstens teilweise in Richtung der Eintrittsöffnung an der B-Säulenverkleidung hin verstellt wird.

Zum besseren technischen Verständnis der Erfindung wird ein nicht erfindungsgemäßes Verfahren zum Betreiben einer Klimatisierungseinrichtung für einen Innenraum eines Kraftwagens zur Bereitstellung einer klimatisierten Luftmenge innerhalb des Innenraums beschrieben. Bei dem Verfahren wird ein Luftstrom aus einer B-Säulendüse innerhalb einer B-Säule des Kraftwagens in einen Fondbereich des Innenraums ausgeströmt, wobei die Luftmenge aus dem Innenraum über eine mit einem hinter einer B-Säulenverkleidung der B-Säule angeordnetes Gebläse verbundene Lufteintrittsöffnung an der B-Säulenverkleidung angesaugt wird. Schließlich wird die Luftmenge über die B-Säulendüse in den Fondbereich als Luftstrom ausgeströmt wird. An der B-Säulendüse ist wenigstens ein Verstellelement angeordnet, mittels welchem die ausströmende Luftmenge als der Luftstrom in ihrer Luftaustrittsrichtung wenigstens teilweise verstellt wird. Zudem wird der Luftstrom mittels eines an der B-Säulendüse zur elektrischen Kühlung angeordneten Peltierelements wenigstens teilweise gekühlt. Analog dazu wird der Luftstrom mittels eines an der B-Säulendüse zur elektrischen Heizung angeordneten PTC-Elements geheizt. Es ist zudem vorgesehen, dass das Gebläse als ein Radialgebläse ausgebildet ist, mittels welchem der Luftstrom im Wesentlichen axial zu einer Fahrzeugquerrichtung angesaugt und radial zu der Fahrzeugquerrichtung ausgeströmt wird. Schließlich ist an der Klimatisierungseinrichtung eine Regelungseinrichtung angeordnet, mittel welcher das Gebläse und/oder das Verstellelement und/oder das Peltierelement und/oder das PTC-Element wenigstens teilweise geregelt werden.

Soweit sie sich auf die erfindungsgemäße Lösung beziehen, ergeben sich weitere Vorteile und Einzelheiten der Erfindung aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den von den Ansprüchen definierten Rahmen der Erfindung zu verlassen.

Dabei zeigen:
- Fig. 1: eine Draufsicht auf einer B-Säule in einem Innenraum eines gattungsgemäßen Kraftwagens aus der Perspektive eines sich innerhalb des Kraftwagens befindenden Insassen;
- Fig. 2: eine weitere Draufsicht der B-Säule ebenfalls aus der Perspektive des sich innerhalb des Kraftwagens befindlichen Insassen, wobei hier eine erfindungsgemäße Ausgestaltung der Klimatisierungseinrichtung des Kraftwagens dargestellt wird; und
- Fig. 3: eine Seitenansicht eines Gebläses und einer B-Säulendüse der Klimatisierungseinrichtung zur Veranschaulichung eines gattungsgemäßen Aufbaus, wobei diese innerhalb der nicht dargestellten B-Säule angeordnet sind.

In den Figuren sind gleiche und funktionsgleiche Elemente mit den gleichen Bezugszeichen versehen.

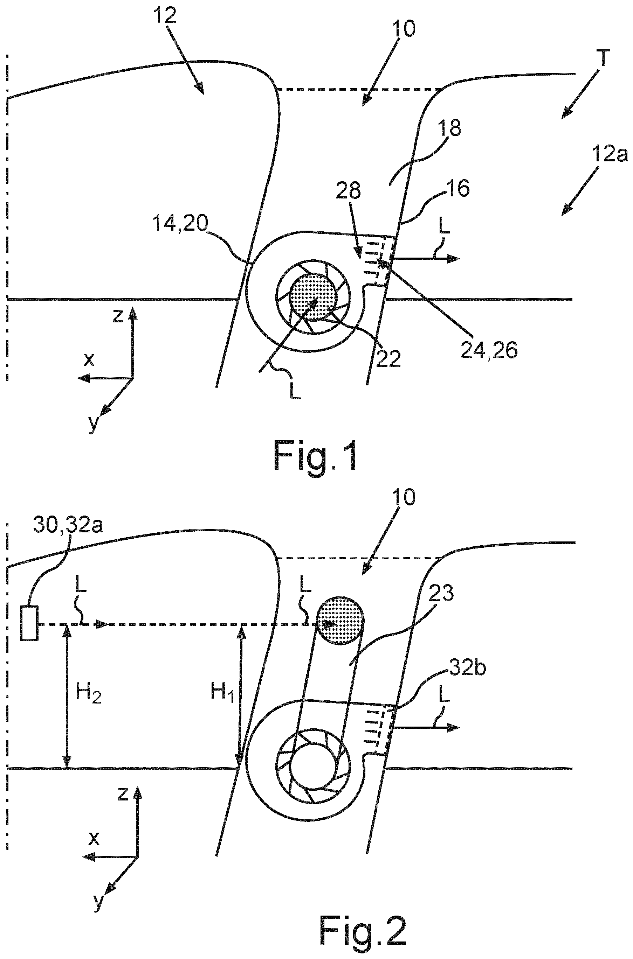

Fig. 1 zeigt eine Draufsicht auf einer B-Säule 10 in einem Innenraum 12 eines Kraftwagens aus der Perspektive eines sich innerhalb des Kraftwagens befindenden Insassen. Hierbei soll eine nicht erfindungsgemäße Klimatisierungseinrichtung 14 für den Innenraum 12 des Kraftwagens dargestellt werden, welche zur Bereitstellung einer klimatisierten Luftmenge und somit zur Anpassung einer Temperatur T innerhalb des Innenraums 12 ausgebildet ist, um den Komfort des Insassen wenigstens teilweise zu steigern.

Die Klimatisierungseinrichtung 14 weist hierbei wenigstens eine B-Säulendüse 16 innerhalb der B-Säule 10 auf, insbesondere weist die Klimatisierungseinrichtung 14 an jeder B-Säule 10 zwei zueinander korrespondierende B-Säulendüsen 16 auf, wobei in Fig. 1 nur eine Seite des Innenraums 12 und somit nur eine B-Säule 10 dargestellt wird. Die wenigstens eine B-Säulendüse 16 ist zur Ausströmung eines Luftstroms L zur Verbesserung des Komforts in einem Fondbereich 12a des Innenraums 12 anwendbar, bei einer Anordnung jeweiliger B-Säulendüsen 16 an den jeweiligen B-Säulen 10 ist es dementsprechend vorgesehen, dass die B-Säulendüsen 16 jeweilige Luftströme L korrespondierend zu deren Einstellung beidseitig in jeweilige Fondbereiche 12a des Innenraums 12 ausströmen. Die austretenden Luftströme L werden somit in den Innenraum 12 ausgeströmt und stellen somit eine wenigstens teilweise durch die Klimatisierungseinrichtung 14 klimatisierte Luftmenge innerhalb des Innenraums 12, insbesondere im Fondbereich 12a bereit.

Um den Komfort des Insassen insbesondere im Fondbereich 12a wenigstens teilweise zu steigern ist es vorgesehen, dass hinter einer B-Säulenverkleidung 18 der B-Säule 10 wenigstens ein Gebläse 20, insbesondere ein Radialgebläse angeordnet ist. Mittels des Gebläses 20 ist der Luftstrom L im Wesentlichen axial zu einer Fahrzeugquerrichtung y ansaugbar und im Wesentlichen radial zur Fahrzeugquerrichtung y und somit im Wesentlichen in Fahrzeuglängsrichtung x nach hinten in den Fondbereich 12a ausströmbar. Hierfür ist eine Lufteintrittsöffnung 22 insbesondere an der zum Innenraum 12 zeigenden B-Säulenverkleidung 18 angeordnet, wobei die B-Säulendüse 16 an einem seitlichen Bereich der B-Säulenverkleidung 18 angeordnet ist, insbesondere an der in Fahrzeuglängsrichtung x nach hinten zeigenden Seite. Somit wird der Fondbereich 12a des Kraftwagens mit dem Luftstrom L wenigstens teilweise klimatisiert, wodurch der Komfort für den Insassen insbesondere im Fondbereich 12a wenigstens teilweise gesteigert wird.

In der B-Säulendüse 16 ist zur Kühlung des ausströmenden Luftstroms L ein Peltierelement 24 angeordnet. Alternativ sind weitere Kühlungsmittel und/oder Kühlungselemente anwendbar, wobei die Temperierung, insbesondere die Kühlung des Luftstroms L zur Komfortsteigerung vorgesehen ist. Zudem ist in der B-Säulendüse 16 zum Heizen des Luftstrom Lein PTC-Element 26 angeordnet, alternativ sind weitere Heizmittel und/oder Heizelemente anwendbar, wobei die Temperierung, insbesondere das Heizen des Luftstroms L ebenfalls zur Komfortsteigerung vorgesehen ist. Durch einen elektrischen Anschluss sind das Peltierelement 24 und das PTC-Element 26 und/oder weitere Temperierungselemente und/oder Temperierungsmittel insbesondere elektrisch steuerbar und regelbar. Die Fig. 1 zeigt hierbei eine Anordnung des Peltierelements 24 und des PTC-Elements 26, bei welcher in einer Luftausströmrichtung des Luftstroms L, das Peltierelement 24 vor dem PTC-Element 26 angeordnet ist. Die Luftausströmrichtung ist hierbei insbesondere im Wesentlichen axial zur Fahrzeuglängsrichtung x, ist jedoch nach hinten in den Fondbereich 12a gerichtet. Zudem ist insbesondere vorgesehen, dass das Peltierelement 24 als auch das PTC-Element 26 in einem Bereich der B-Säulendüse 16, insbesondere in einem Bereich zwischen der B-Säulendüse 16 und dem Gebläse 20, insbesondere an einem Ausströmkanal 28 aus dem Gebläse 20 durch die B-Säulendüse 16 in den Fondbereich 12a hin angeordnet sind.

Hierbei kann sich das Peltierelement 24 als auch das PTC-Element 26 entlang eines Querschnitts des Ausströmkanals 28 erstrecken.

In anderen Worten ist ein bereits klimatisierter Luftstrom L aus dem Innenraum 12 über die Lufteintrittsöffnung 22 ansaugbar und über die B-Säulendüse 16 in den Fondbereich 12a wieder ausströmbar. Das bedeutet, dass zur Bewahrung einer einheitlichen Ausgestaltung des Innenraums 12, die B-Säulendüse 16 hinter der B-Säulenverkleidung 18 angeordnet ist, insbesondere so, dass die B-Säulendüse 16 für den Insassen unsichtbar ist. Die B-Säule 10 weist hierfür einen vorgegebenen Raum auf, in welchem das Gebläse 20 und die B-Säulendüse 16 aufgenommen sind sowie jeweilige Anschlüsse für eine elektrische/elektronische Kopplung des Gebläses 20 und weiterer Komponenten an wenigstens eine Stromquelle und/oder an einer in der Fig. 1 nicht dargestellten Steuereinrichtung der Klimatisierungseinrichtung 14. Um die klimatisierte Luftmenge aus dem Innenraum 12 anzusaugen, weist das Gebläse 20 die Lufteintrittsöffnung 22 auf, welche beispielsweise hierfür, insbesondere als eine Vielzahl von Lufteintrittsöffnungen 22 mit einem geringen Durchmesser beziehungweise als Gitter ausgebildet ist, um vom menschlichen Auge möglich ungesehen zu bleiben. Der durch das Gebläse 20 angesaugte klimatisierte Luftstrom L, das heißt insbesondere die durch das Gebläse 20 angesaugte temperierte Luft/Luftmenge wird nun über die dem Gebläse 20 angeordnete B-Säulendüse 16 in den Fondbereich 12a des Innenraums 12 ausgeströmt. Hierbei wird insbesondere mittels der Klimatisierungseinrichtung 14 ein Richtungswechsel des angesaugten Luftstroms L gegenüber dem ausgeströmten Luftstrom L durchgeführt, wobei mittels des Gebläses 20 und mittels der B-Säulendüse 16 auch eine Temperierung als auch eine Änderung von Stärke und Intensität des ausströmenden Luftstroms L wenigstens teilweise einstellbar ist.

Fig. 2 zeigt eine weitere Draufsicht der B-Säule 10 im Innenraum 12 des Kraftwagens aus der Perspektive des sich innerhalb des Kraftwagens befindenden Insassen, wobei hier eine erfindungsgemäße Ausgestaltung der Klimatisierungseinrichtung 14 des Kraftwagens dargestellt wird.

Hierbei ist ein aus wenigstens einer vorderen Seitendüse 30 Klimaanlage des Kraftwagens ausströmender Luftstrom L wenigstens teilweise auf einer zur ersten Höhe H1 der Lufteintrittsöffnung 22 an der B-Säule 10 korrespondierenden zweiten Höhe H2 ausströmbar, wobei hierfür die Seitendüse 30 auf der zweiten Höhe H2 angeordnet ist. Zum Erreichen der vorgegebenen zweiten Höhe H2 der Seitendüse 30, ohne das Gebläse 20 an eine weitere Stelle der B-Säule 10 anordnen zu müssen wird in der Fig. 2 zwischen dem Gebläse 20 und der Lufteintrittsöffnung 22 ein länglich ausgebildeter Luftkanal 23 dargestellt. Der aus der Seitendüse 30 austretende Luftstrom L wird durch die Lufteintrittsöffnung 22 angesaugt und stromabwärts entlang des Luftkanals 23 in Richtung des Gebläses 20 vom Gebläse 20 angesaugt und somit befördert, um anschließend durch die B-Säulenluftdüse 16 in den Fondbereich 12a als wenigstens teilweise erneut klimatisierter Luftstrom L in den Fondbereich 12a ausgeströmt zu werden.

In anderen Worten ist der Luftkanal 23 zwischen der Lufteintrittsöffnung 22 und dem Gebläse 20 angeordnet. Der durch die Eintrittsöffnung 22 angesaugte Luftstrom L wird somit über den Luftkanal 23 in das Gebläse 20 befördert, wobei der Luftkanal 23 insbesondere zum Höhenausgleich der zuvor genannten Höhen H1, H2 der Eintrittsöffnung 22 und der Seitendüsen 30 angewendet wird. Um einen Temperaturverlust zu vermieden ist der Luftkanal 23 möglichst linear gebildet, wodurch der geringste Weg zum Gebläse 20 hin genutzt wird. Zusätzlich kann der Luftkanal 23 mit einem Dämmmaterial beispielwiese aus einem Kunststoff ummantelt sein, um einen Temperaturverlust entlang des Kanals 23 wenigstens teilweise zu vermeiden.

Es ist zudem vorgesehen, dass die wenigstens eine vordere Seitendüse 30 und die B-Säulendüse 16 jeweilig wenigstens ein Verstellelement 32a, 32b aufweisen, mittels welchem die ausströmenden Luftströme L wenigstens teilweise in jeweiliger Ausstrittsrichtung verstellbar sind. Insbesondere können hierbei sämtliche Ausgestaltungen von Verstellelementen 32a, 32b angeordnet werden, insbesondere Lamellen und/oder weitere Element, welche vordergründig einen Richtungswechsel des Luftstroms L bewirken. Diese Verstellelemente 32a, 32b sind mittels einer Steuereinrichtung und oder mittels einer Mechanik verstellbar, insbesondere wenigstens teilweise automatisch, wodurch beispielweise der aus der Seitendüse 30 austretende Luftstrom L im Wesentlich in Richtung der Lufteintrittsöffnung 22 richtbar ist beziehungsweise gerichtet werden kann. Der in den Fondbereich 12a austretende Luftstrom L kann durch einen Insassen zu sich selbst hin gerichtet beziehungsweise verstellt werden. Mittels einer Regelungseinrichtung sind die Verstellelement 32a, 32 regelbar und somit auch eine Intensität und eine Richtungder aus den Verstelltelemetnen 32a, 32b austretende Luftstrom L.

In anderen Worten wird in der vorliegenden Erfindung für die B-Säule 10 ein Gebläse 20 hinter der B-Säulenverkleidung 18 vorgeschlagen, vorzugsweise ist dieses Gebläse 20 ein Radialgebläse, welches Luft axial, in erster Näherung in Fahrzeugquerrichtung y ansaugt und radial, in erster Näherung in Fahrzeuglängsrichtung x ausbläst und der auf der Rückseite der B-Säule 10 angebrachten B-Säulendüse 16 zuführt. Das heißt, dass die Belüftung über die B-Säulendüsen 16 autark von einer Fahrzeugklimaanlage ist. Der Fahrzeuginsasse kann den Luftmassenstrom durch Variation der Gebläseleistung individuell einstellen. Ebenso kann die Luftaustrittsrichtung mittels als Lamellen ausgebildete Verstellemente 32b der B-Säulendüse 16 verstellt werden. Durch Erhöhung des Luftmassenstroms kann beispielweise im Sommer die konvektive Luftkühlung erhöht werden, ebenso kann im Winter durch Erhöhung des Luftmassenstroms und Ausblasung der Luft in Richtung einer Fondseitenscheibe ein Beschlagsrisiko gesenkt werden. Die Luft, die durch die Lufteintrittsöffnung 22 angesaugt wird, ist bereits temperierte Kabinenluft. Darüber hinaus kann die aus den vorderen Seitendüsen 30 ausgeblasene klimatisierte Luft, die entlang vorderer Seitenscheiben strömt und dann auf die B-Säule 10 auftrifft in vorteilhafter Weise durch das Gebläse 20 angesaugt werden, wodurch die an den B-Säulendüsen 16 ausgeblasene Luft/Luftmenge im Sommer zusätzlich kühler und im Winter zusätzlich wärmer ist. Das heißt, dass das Gebläse 20 mit den vorderen Seitendüsen 30 korrespondiert und die Klimaleistung nutzt und somit die Komfortsteigerung für die Fondinsassen vermehrt. Es können Regelungsstrategien vorgesehen sein, die diese korrespondierende Wirkung zwischen vorderen Seitendüsen 30 und B-Säulendüsen 16 realisieren und optimieren.

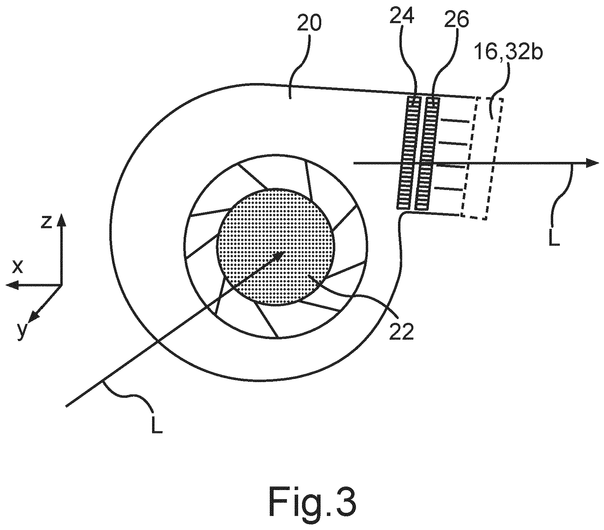

Zur Vermeidung einer zu starken Durchschallung des Gebläses 20 ist hierbei in der B-Säule 10 ein kurzer Luftkanal 23 vorgesehen und die Lufteintrittsöffnung 22 an der B-Säule 10 ist nach oben verschoben, wodurch diese sich noch näher am Luftstrom aus den vorderen Seitendüsen 30 befindet. Fig. 3 zeigt eine Seitenansicht des Gebläses 20 und der B-Säulendüse 16 zur veranschaulichung eines gattungsgemäßen Aufbaus, wobei diese innerhalb der nicht dargestellten B-Säule 10 angeordnet sind. Insbesondere soll dargestellt werden, dass der Luftstrom in den Fondbereich 12a zur wenigstens teilweisen Steigerung des Komforts des Insassen ausgestömt wird. Hinter der B-Säulenverkleidung 18 der B-Säule 10 ist somit das wenigstens eine Gebläse 20, insbesondere das Radialgebläse angeordnet, mittels welchem der Luftstrom L im Wesentlichen axial zu einer Fahrzeugquerrichtung y ansaugbar und im Wesentlichen radial zur Fahrzeugquerrichtung y und somit im Wesentlichen in Fahrzeuglängsrichtung x nach hinten in den Fondbereich 12a ausströmbar ist. Hierfür ist die Lufteintrittsöffnung 22 insbesondere an der zum Innenraum 12 zeigenden B-Säulenverkleidung 18 angeordnet, wobei die B-Säulendüse 16 an dem seitlichen Bereich der B-Säulenverkleidung 18 angeordnet ist, insbesondere an der in Fahrzeuglängsrichtung x nach hinten zeigenden Seite. Dadurch wird der Fondbereich 12a des Kraftwagens mit dem Luftstrom L wenigstens teilweise klimatisiert, wodurch der Komfort für den Insassen insbesondere im Fondbereich 12a wenigstens teilweise gesteigert wird.

Schließlich wird die Klimatisierungseinrichtung 14 mittels eines Verfahrens betrieben, bei welchem einer klimatisierten Luftmenge innerhalb des Innenraums 12 des Kraftwagens bereitgestellt wird. Hierbei wird der Luftstrom L aus der B-Säulendüse 16 innerhalb der B-Säule 10 des Kraftwagens in den Fondbereich 12a des Innenraums 12 ausgeströmt. Die Luftmenge wird aus dem Innenraum 12 über die mit dem hinter einer B-Säulenverkleidung 18 der B-Säule 10 angeordneten Gebläse 20 verbundene Lufteintrittsöffnung 22 an der B-Säulenverkleidung 18 angesaugt und über die B-Säulendüse 16 in den Fondbereich 12a als Luftstrom L ausgeströmt.

## Patentansprüche

1. Kraftwagen aufweisend eine Klimatisierungseinrichtung (14) für einen Innenraum (12) des Kraftwagens zur Bereitstellung einer klimatisierten Luftmenge innerhalb des Innenraums (12), mit wenigstens einer B-Säulendüse (16) innerhalb einer B-Säule (10) des Kraftwagens zur Ausströmung eines Luftstroms (L) in einen Fondbereich (12a) des Innenraums (12), wobei hinter einer B-Säulenverkleidung (18) der B-Säule (10) wenigstens ein Gebläse (20) angeordnet ist, durch welches die Luftmenge aus dem Innenraum (12) über eine mit dem Gebläse (20) verbundene Lufteintrittsöffnung (22) an der B-Säulenverkleidung (18) ansaugbar ist, und wobei die Luftmenge über die B-Säulendüse (16) in den Fondbereich (12a) als Luftstrom (L) ausströmbar ist, wobei in der B-Säulendüse (16) zur elektrischen Kühlung ein Peltierelement (24) angeordnet ist,
**dadurch gekennzeichnet, dass**
in der B-Säulendüse (16) zur elektrischen Heizung ein PTC-Element (26) angeordnet ist, und in einer Luftaustrittsrichtung des Luftstroms (L) aus der B-Säulendüse (16) das Peltierelement (24) vor dem PTC-Element (26) angeordnet ist und die Lufteintrittsöffnung (22) in Fahrzeughochrichtung (z) im Wesentlichen oberhalb des Gebläses (20) angeordnet ist.

2. Kraftwagen nach Anspruch 1,
**dadurch gekennzeichnet, dass**
ein Luftkanal (23) zwischen der Lufteintrittsöffnung (22) und dem Gebläse (20) angeordnet ist.

3. Kraftwagen nach einem der vorhergehenden Ansprüche,
**dadurch gekennzeichnet, dass**
an der B-Säulendüse (16) wenigstens ein Verstellelement angeordnet ist, mittels welchem die ausströmende Luftmenge als der Luftstrom (L) in ihrer Luftaustrittsrichtung wenigstens teilweise verstellbar ist.

4. Kraftwagen nach einem der vorhergehenden Ansprüche,
**dadurch gekennzeichnet, dass**
das Gebläse (20) als ein Radialgebläse ausgebildet ist, mittels welchem der Luftstrom (L) im Wesentlichen axial zu einer Fahrzeugquerrichtung (y) ansaugbar und radial zu der Fahrzeugquerrichtung (y) ausströmbar ist,

5. Kraftwagen nach Anspruch 4 ,
**dadurch gekennzeichnet, dass**
eine Regelungseinrichtung angeordnet ist, mittel welcher das Gebläse (20) und/oder das Verstellelement und/oder das Peltierelement (24) und/oder das PTC-Element (26) wenigstens teilweise regelbar sind.

## Claims

1. Automobile comprising an air conditioning device (14) for an interior (12) of the automobile, which air conditioning device provides an air-conditioned air volume inside the interior (12) and has at least one B-pillar nozzle (16) within a B-pillar (10) of the automobile for outflow of an airflow (L) into a rear region (12a) of the interior (12), wherein at least one fan (20) is arranged behind a B-pillar covering (18) of the B-pillar (10), through which fan the air volume from the interior (12) can be sucked in via an air inlet opening (22) at the B-pillar covering (18) that is connected to the fan (20), and wherein the air volume can flow out via the B-pillar nozzle (16) into the rear region (12a) as airflow (L), wherein a Peltier element (24) is arranged for electric cooling in the B-pillar nozzle (16),
**characterized in that**
a PTC element (26) is arranged for electric heating in the B-pillar nozzle (16), and the Peltier element (24) is arranged upstream of the PTC element (26) in an air outlet direction of the airflow (L) from the B-pillar nozzle (16), and the air inlet opening (22) is arranged substantially above the fan (20) in the upward direction (z) of the vehicle.

2. Automobile according to claim 1,
**characterized in that**
an air duct (23) is arranged between the air inlet opening (22) and the fan (20).

3. Automobile according to either of the preceding claims,
**characterized in that**
at least one adjusting element is arranged at the B-pillar nozzle (16), by means of which adjusting element the out-flowing air volume, as the airflow (L), is at least partially adjustable in the air outlet direction thereof.

4. Automobile according to any of the preceding claims,
**characterized in that**
the fan (20) is designed as a radial fan, by means of which the airflow (L) can be sucked in substantially axially to a transverse direction (y) of the vehicle and can flow out radially to the transverse direction (y) of the vehicle.

5. Automobile according to claim 4,
**characterized in that**
a control device is arranged by means of which the fan (20) and/or the adjusting element and/or the Peltier element (24) and/or the PTC element (26) can be at least partially controlled.

## Revendications

1. Voiture automobile présentant un dispositif de climatisation (14) pour un habitacle (12) de la voiture automobile, lequel dispositif de climatisation est destiné à fournir un volume d'air climatisé à l'intérieur de l'habitacle (12), comportant au moins une buse de colonne B (16) située à l'intérieur d'une colonne B (10) de la voiture automobile pour l'expulsion d'un flux d'air (L) dans une zone arrière (12a) de l'habitacle (12), dans laquelle au moins un ventilateur (20) est agencé derrière un habillage de colonne B (18) de la colonne B (10), ventilateur à travers lequel le volume d'air provenant de l'habitacle (12) peut être aspiré au niveau de l'habillage de colonne B (18) par l'intermédiaire d'une ouverture d'entrée d'air (22) reliée au ventilateur (20), et dans laquelle le volume d'air peut être expulsé, par l'intermédiaire de la buse de colonne B (16), vers la zone arrière (12a) sous forme de flux d'air (L), dans laquelle un élément Peltier (24) est agencé dans la buse de colonne B (16) pour le refroidissement électrique,
**caractérisée en ce que**
un élément PTC (26) est agencé dans la buse de colonne B (16) pour le chauffage électrique, et dans une direction de sortie d'air du flux d'air (L) provenant de la buse de colonne B (16), l'élément Peltier (24) est agencé en amont de l'élément PTC (26) et l'ouverture d'entrée d'air (22) est positionnée, dans la direction verticale du véhicule (z), sensiblement au-dessus du ventilateur (20).

2. Voiture automobile selon la revendication 1,
**caractérisée en ce que**
un conduit d'air (23) est agencé entre l'ouverture d'entrée d'air (22) et le ventilateur (20).

3. Voiture automobile selon l'une des revendications précédentes,
**caractérisée en ce que**
au moins un élément de réglage est agencé au niveau de la buse de colonne B (16), élément de réglage à l'aide duquel le volume d'air sortant, sous forme de flux d'air (L), peut être réglé au moins en partie dans sa direction de sortie d'air.

4. Voiture automobile selon l'une des revendications précédentes,
**caractérisée en ce que**
le ventilateur (20) est conçu comme un ventilateur radial, à l'aide duquel le flux d'air (L) peut être aspiré sensiblement dans le sens axial par rapport à une direction transversale de véhicule (y) et expulsé radialement par rapport à la direction transversale de véhicule (y),

5. Voiture automobile selon la revendication 4,
**caractérisée en ce que**
un dispositif de régulation est agencé, à l'aide duquel le ventilateur (20) et/ou l'élément de réglage et/ou l'élément Peltier (24) et/ou l'élément PTC (26) peuvent être régulés au moins partiellement.
